**Europäisches Patentamt**

**European Patent Office**

**Office européen des brevets**

(19)

(11) Numéro de publication : **0 410 838 B1**

# FASCICULE DE BREVET EUROPEEN

(12)

(45) Date de publication du fascicule du brevet :
**05.05.93 Bulletin 93/18**

(51) Int. Cl.⁵ : **C03B 35/18, B65G 39/07, F27D 3/02, F16D 1/08, F16C 13/00**

(21) Numéro de dépôt : **90402002.1**

(22) Date de dépôt : **12.07.90**

(54) **Rouleau de transport de feuilles de verre.**

(30) Priorité : **22.07.89 DE 3924277**

(43) Date de publication de la demande :
**30.01.91 Bulletin 91/05**

(45) Mention de la délivrance du brevet :
**05.05.93 Bulletin 93/18**

(84) Etats contractants désignés :
**BE CH FR GB IT LI LU**

(56) Documents cités :
**EP-A- 0 217 262**
**US-A- 4 399 598**

(73) Titulaire : **SAINT-GOBAIN VITRAGE INTERNATIONAL**
**"Les Miroirs" 18, avenue d'Alsace**
**F-92400 Courbevoie (FR)**

(72) Inventeur : **Vanaschen, Luc**
**Binsterweg 11.3**
**B-4700 Eupen (BE)**
Inventeur : **Kuster, Hans-Werner**
**Schervierstrasse 20**
**W-5100 Aachen (DE)**
Inventeur : **Havenith, Hubert**
**Hauptstrasse 295**
**W-5102 Würselen (DE)**
Inventeur : **Schubert, Gerhard**
**Gertrudisstrasse 9**
**W-5120 Herzogenrath (DE)**

(74) Mandataire : **Menes, Catherine et al**
**SAINT-GOBAIN RECHERCHE 39, Quai Lucien Lefranc**
**F-93300 Aubervilliers (FR)**

## Description

L'invention a trait aux techniques de transport de feuilles de verre, notamment au travers de fours horizontaux dits de bombage/trempe, dans lesquels la feuille de verre est réchauffée à température de bombage et/ou de trempe. Plus précisément l'invention a pour objet un rouleau de transport constitué d'un corps cylindrique en céramique dont au moins une de ses extrémités est munie d'une pièce d'accouplement métallique du type fusée.

Dans un four de bombage/trempe, le verre est habituellement transporté par des rouleaux dont la partie en contact avec le verre est constituée par un corps cylindrique en céramique, notamment en silice, c'est-à-dire consistant en un matériau résistant à la chaleur sans grande déformation et au contact duquel la surface du verre n'est pas altérée notamment par la formation de piqûres. Ces corps cylindriques en céramique sont généralement munis de fusées métalliques coiffant les extrémités des rouleaux, lesquelles sont par exemple fixées à des pignons d'engrenage ou d'autres moyens d'accouplement avec un mécanisme d'entraînement en rotation.

Même si les extrémités des rouleaux dépassent de chaque côté du four, ces fusées métalliques s'échauffent fortement en cours de fonctionnement et des températures de plusieurs centaines de degrés Celcius sont courantes. Il se pose donc un problème délicat de fixation des fusées en métal sur des pièces en céramique dont le coefficient de dilatation thermique est très inférieur au coefficient de dilatation thermique du métal. En se dilatant, la fusée a ainsi tendance à s'écarter du corps cylindrique qu'elle coiffe et la liaison entre les deux pièces n'est plus assurée.

Pour obvier cette difficulté, il a été proposé dans le brevet US-A-4 404 011 un rouleau de transport muni d'une fusée coiffante métallique dont le diamètre intérieur est plus grand que le diamètre extérieur de l'extrémité du corps en céramique. L'espace intercalaire ainsi dégagé abrite une série de ressorts à lame agencés en ayant leur partie médiane pressée sur la surface périphérique de l'extrémité du corps en céramique et leurs parties terminales appliquées sur la face intérieure de la fusée. La précontrainte des ressorts est suffisamment grande à température ambiante pour que ceux-ci exercent encore la pression nécessaire lorsque l'espace intercalaire s'agrandit radialement. Mais cette solution impose l'usage de rouleaux dont les extrémités sont montées à l'extérieur du four, où elles sont à des températures relativement plus basses, ceci car les ressorts à lame perdent leurs propriétés d'élasticité à des températures élevées. Comme par ailleurs la longueur d'un rouleau en céramique ne peut excéder une valeur donnée au-delà de laquelle sa flèche devient sensible et risque d'entraîner un bombage parasite, ceci conduit à une limitation sévère de la largeur des fours.

La présente invention a pour but un rouleau de transport en céramique dont au moins une de ses extrémités est pourvue d'une fusée métallique coiffante fixée de manière sure même si la température est très élevée et rend défaillants les modes de fixation connus.

Ce but est atteint par le rouleau suivant la revendication 1 Conformément à cette revendication, le rouleau de transport selon l'invention est constitué d'un corps cylindrique en céramique dont au moins une de ses extrémités est munie d'une fusée métallique coiffant le rouleau avec un certain jeu comblé par un corps métallique formé par un fourreau fait d'un métal se dilatant plus que la fusée et présentant au moins une fente axiale.

En raison de la différence des coefficients de dilatation thermique, le fourreau va ainsi systématiquement occuper tout le volume intercalaire, dans une extension radiale qui va compenser l'accroissement du diamètre intérieur de la fusée dû à la dilatation thermique de celle-ci - ceci sans rupture du contact entre le rouleau céramique et le fourreau.

La ou de préférence les fentes axiales sont destinées à éviter que la dilatation thermique du fourreau, dans le sens tangentiel, ne conduise pas à une augmentation de diamètre du fourreau. La dilatation thermique tangentielle a ainsi exclusivement pour conséquence la diminution de la largeur des fentes axiales du fourreau qui reste bien bloquée par la pièce d'about de la fusée. Mais ces fentes axiales n'empêchent nullement la dilatation en volume du fourreau dans le sens radial.

De préférence seule une des fentes axiales s'étend sur toute la longueur du fourreau, ce qui permet de maintenir ensemble les différents segments du fourreau et facilite sa mise en place. Le matériau et l'épaisseur de paroi du fourreau doivent être choisis en fonction des coefficients de dilatation thermique de la matière céramique utilisée et du métal choisi pour la fusée coiffante, l'augmentation du rayon de la fusée devant correspondre à l'augmentation de l'épaisseur de la paroi du fourreau.

Avantageusement, la fusée est réalisée en un acier à haute teneur en nickel ayant un coefficient de dilatation thermique linéaire moyen compris entre 2 et 6 $10^{-6}$ $K^{-1}$.

Pour le fourreau, on pourra utiliser une pièce en aluminium, alliage d'aluminium ou acier chromé ayant un coefficient de dilatation thermique linéaire moyen compris entre 10 et 25 $10^{-6}$ $K^{-1}$.

D'autres détails et caractéristiques avantageuses de l'invention sont donnés ci-après en relation avec la description d'un exemple de réalisation de l'invention, faite en référence aux dessins en perspective annexés qui représentent :

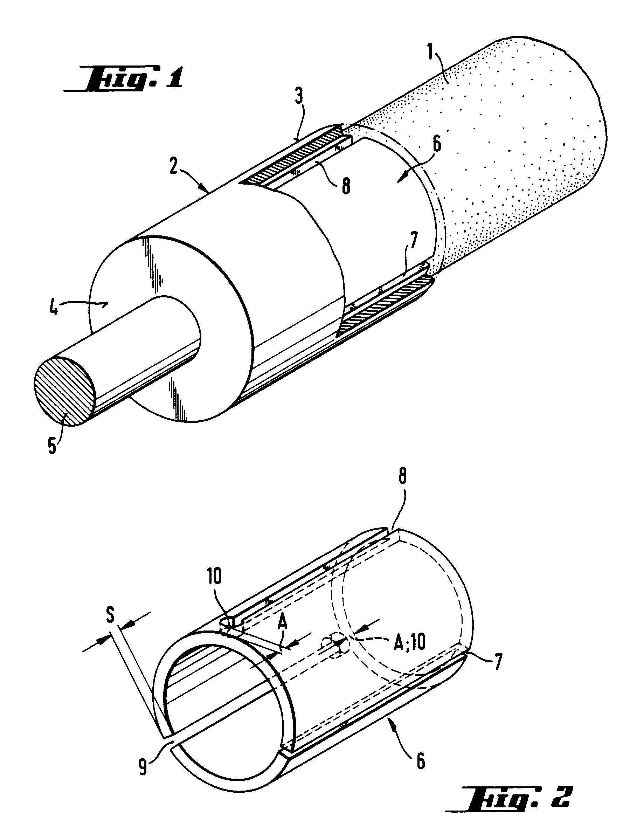

   . **figure 1** : une vue de l'extrémité d'un rouleau de transport comportant une fusée métallique fixée conformément à l'invention,

. **figure 2** : un fourreau métallique selon l'invention.

Le rouleau de transport représenté à la figure 1 est essentiellement constitué par un corps cylindrique 1, massif ou tubulaire, fait en céramique résistant à la chaleur.

On peut utiliser par exemple des tubes pleins ou creux en silice coulée à l'état fondu ou bien frittée. On peut également utiliser suivant l'exemple de la demande de brevet EP-A-375 484 du carbure de silicium. Pour un four de bombage et/ou de trempe, on utilise généralement des corps cylindriques d'environ 5 cm de diamètre.

A une au moins des extrémités du corps cylindrique 1 est fixée une fusée métallique 2 qui coiffe cette extrémité et qui comprend dans le cas représenté, une partie cylindrique creuse 3 et une plaque d'about 4 prolongée d'un bout d'arbre centré 5 qui sert, par exemple, à l'accouplement du rouleau de transport avec un mécanisme d'entraînement approprié assurant une rotation synchrone de tous les rouleaux de transport.

La fusée métallique 2 ne doit pas obligatoirement être munie d'une plaque d'about et il peut s'agir d'un simple cylindre métallique creux. Cette dernière réalisation est suffisante, par exemple, lorsque le rouleau de transport est soutenu dans la région des fusées ou lorsque l'entraînement rotatif des arbres de transport se fait par friction sur une bande sur laquelle les fusées reposent.

Dans le cas représenté, le corps cylindrique en céramique est d'un diamètre constant sur toute sa longueur, le diamètre de la fusée 2 est donc supérieur au diamètre extérieur du corps cylindrique servant au transport des feuilles de verre, la différence correspondant à deux fois l'épaisseur de paroi de la partie cylindrique creuse 3 et deux fois l'épaisseur de paroi du fourreau 6 insérée entre le corps 1 et la fusée 2.

Il est évident que l'invention s'applique également au cas où la partie d'extrémité du corps de transport 1 est amincie par exemple de manière à ce que la fusée 2 ait un diamètre équivalent à celui de la partie médiane du corps 1.

Le fourreau 6 a la forme d'un cylindre creux ayant une épaisseur de paroi S avec des fentes axiales 7, 8 et 9. La fente 7 est, dans ce cas, réalisée sous la forme d'une fente s'étendant sur toute la longueur du fourreau 6. Pour assurer la cohésion de la douille en présence de plusieurs fentes, les autres fentes 8 et 9 ne sont pas des fentes de part en part, mais se terminent à une petite distance A d'une face de base du fourreau, de sorte que les divers segments restent unis par le pont 10 qui subsiste. Avantageusement, les fentes 8 et 9 sont pratiquées de façon que le pont 10 qui subsiste soit situé, en alternance, à une extrémité ou l'autre du fourreau 6.

Comme déjà indiqué, l'épaisseur de paroi S du fourreau 6 doit avoir une valeur minimale définie pour atteindre le but conforme à l'invention, cette valeur minimale dépendant, d'une part, du diamètre du corps cylindrique ou plus précisément de l'extrémité dudit corps cylindrique qu'enveloppe la fusée 2 et, d'autre part, des coefficients de dilatation thermique des différents matériaux. Cette relation peut être déterminée par calcul.

Si on désigne le diamètre de l'arbre de transport par D, le coefficient de dilatation thermique linéaire moyen de la matière céramique par $\alpha_1$, le coefficient de dilatation thermique linéaire moyen du métal dont est faite la fusée d'extrémité par $\alpha_2$ et le coefficient de dilatation thermique linéaire moyen du métal dont est fait le fourreau par $\alpha_3$, la déduction mathématique impose la relation suivante entre l'épaisseur de paroi S de la douille et les grandeurs indiquées :

$$S = D (\alpha_3 - \alpha_1) / 2 (\alpha_2 - \alpha_3)$$

Par exemple, si on utilise pour le fourreau 1 d'un diamètre de 50 mm, un silicate pour lequel $\alpha_1 = 0{,}6.10^{-6}K^{-1}$, pour la fusée, un acier réfractaire pour lequel $\alpha_3 = 4.10^{-6}K^{-1}$, et pour la douille de l'aluminium pour lequel $\alpha_2 = 23.10^{-6}K^{-1}$, il résulte de la formule ci-dessus que l'épaisseur de paroi de la douille est de 4,5 mm pour la compensation de l'augmentation du diamètre de la fusée d'extrémité sous l'effet de la chaleur.

**Revendications**

1. Rouleau de transport constitué d'un corps cylindrique en céramique (1) dont au moins une des deux extrémités est munie d'une fusée métallique (2) coiffante dont le diamètre intérieur est plus grand que le diamètre extérieur de l'extrémité du rouleau, l'espace intercalaire entre le rouleau et la fusée étant occupé par un corps métallique qui assure la liaison entre ladite fusée métallique et ladite extrémité du rouleau, même lorsque la fusée métallique se dilate, **caractérisé en ce que** ledit corps intermédiaire est un fourreau (6) présentant au moins une fente axiale (7, 8, 9) fait d'un métal ayant un coefficient de dilatation thermique linéaire plus grand que celui du métal dont est fait la fusée (2), de sorte que la dilatation thermique en direction radiale du fourreau (6) compense l'accroissement du diamètre intérieur de la fusée (2) dû à la dilatation thermique de ladite fusée (2).

2. Rouleau de transport suivant la revendication 1, **caractérisé en ce que** le fourreau (6) présente une fente (7) pratiquée sur toute sa longueur et une ou plusieurs autres fentes (8, 9) qui aboutissent peu avant une des faces de base du fourreau (6), de sorte que les segments résultant des fentes (8, 9) restent unis par des ponts (10).

3. Rouleau de transport suivant la revendication 2, **caractérisé en ce que** les fentes (8, 9) débouchent, en alternance, sur les deux faces de base du fourreau (6).

4. Rouleau de transport suivant l'une quelconque des revendications 1 à 3, **caractérisé en ce que** la fusée (2) consiste en un acier à haute teneur en nickel ayant un coefficient de dilatation thermique linéaire moyen de 2 à $6.10^{-6}K^{-1}$.

5. Rouleau de transport suivant l'une quelconque des revendications 1 à 4, **caractérisé en ce que** le fourreau (6) consiste en un aluminium, en un alliage d'aluminium ou en acier chromé ayant un coefficient de dilatation thermique linéaire moyen de 10 à $25.10^{-6}K^{-1}$.

**Patentansprüche**

1. Transportwelle aus einem keramischen Zylinderkörper (1) mit einer metallischen Endkappe (2) auf wenigstens einem Ende der Welle, wobei der Innendurchmesser der metallischen Endkappe größer ist als der Außendurchmesser des Wellenendes, und in dem Zwischenraum zwischen der Welle und der Endkappe ein metallischer Körper angeordnet ist, der auch bei Vergrößerung des Innendurchmessers der Endkappe infolge Wärmeausdehnung die Verbindung zwischen der Metallkappe und dem Wellenende sicherstellt, **dadurch gekennzeichnet**, daß der Zwischenkörper eine wenigstens einen axialen Schlitz (7,8,9) aufweisende Hülse (6) aus einem Metall mit einem größeren linearen Wärmeausdehnungskoeffizienten als dem des die Endkappe (2) bildenden Metalls ist, so daß die Wärmeausdehnung der Hülse (6) in radialer Richtung die durch die Wärmeausdehnung der Endkappe (2) bedingte Vergrößerung des Innendurchmessers der Endkappe (2) ausgleicht.

2. Transportwelle nach Anspruch 1, dadurch gekennzeichnet, daß die Hülse (6) einen über ihre gesamte Länge durchgehenden Schlitz (7) und einen oder mehrere weitere Schlitze (8,9) aufweist, die kurz vor einer der Basisflächen der Hülse (6) enden, so daß die durch die Schlitze (8,9) entstehenden Hülsensegmente durch Stege (10) verbunden bleiben.

3. Transportwelle nach Anspruch 2, dadurch gekennzeichnet, daß die weiteren Schlitze (8,9) abwechselnd zu den beiden Basisflächen der Hülse (6) hin geöffnet sind.

4. Transportwelle nach einem der Ansprüche 1 bis 3, dadurch gekennzeichnet, daß die Endkappe (2) aus einem hochnickelhaltigen Stahl mit einem mittleren linearen Wärmeausdehnungskoeffizienten von 2 bis $6 \cdot 10^{-6} K^{-1}$ besteht.

5. Transportwelle nach einem der Ansprueche 1 bis 4, dadurch gekennzeichnet, daß die Hülse (6) aus Aluminium, einer Aluminiumlegierung oder einem chromlegierten Stahl besteht und einen mittleren linearen Wärmeausdehnungskoeffizienten von 10 bis $25 \cdot 10^{-6} K^{-1}$ aufweist.

**Claims**

1. Conveying roller, constituted of a cylindrical body of ceramic (1), of which at least one of the two ends is provided with a surrounding metal shaft (2), the internal diameter of which is larger than the external diameter of the end of the roller, the intermediate space between the roller and the shaft being occupied by a metal body which assures the bond between said metal shaft and said end of the roller, even when the metal shaft expands, characterized in that said intermediate body is a sleeve (6) having at least one axial slit (7, 8, 9) made of a metal having a linear coefficient of thermal expansion greater than that of the metal of which the shaft (2) is made, so that the thermal expansion in the radial direction of the sleeve (6) compensates the increase in the internal diameter of the shaft (2) due to the thermal expansion of said shaft (2).

2. Conveying roller according to Claim 1, characterized in that the sleeve (6) has a slit (7) formed throughout its length and one or more other slits (8, 9) which terminate a short distance before one of the end faces of the sleeve (6), so that the segments resulting from the slits (8, 9) remain connected together by bridges (10).

3. Conveying roller according to Claim 2, characterized in that the slits (8, 9) are open at alternate end faces of the sleeve (6).

4. Conveying roller according to any one of Claims 1 to 3, characterized in that the shaft (2) is of a steel with a high nickel content having a mean linear coefficient of thermal expansion of 2 to 6 x $10^{-6}K^{-1}$.

5. Conveying roller according to any one of Claims 1 to 4, characterized in that the sleeve (6) is of an aluminium, of an aluminium alloy or of a chrome steel having a mean linear coefficient of thermal expansion of 10 to 25 x $10^{-6}K^{-1}$.

Fig. 1

Fig. 2